# FASCICULE DE BREVET EUROPEEN

(11) **EP 1 829 469 B1**
(45) Date de publication et mention de la délivrance du brevet: **03.09.2008**
(21) Numéro de dépôt: 07290206.7
(22) Date de dépôt: 15.02.2007
(51) Int. Cl.: A47J 31/40

(54) **Machine à infuser comprenant un dispositif d'éjection du produit infusé**
Brühgerät mit einer Auswurfvorrichtung des aufgebrühten Produkts
Brewing machine comprising an infused product ejecting device

(30) Priorité: 01.03.2006 FR 0601836
(43) Date de publication de la demande: 05.09.2007
(73) Titulaire: SEB SA, 69130 Ecully (FR)
(72) Inventeur: Crosville, Vincent, 14690 Le Mesnil Villement (FR); Giffard, Sylvain, 14610 Cambes en Plaine (FR)
(74) Mandataire: Kiehl, Hubert

(56) Documents cités:
- EP-A- 0 151 252
- EP-A- 1 050 258
- EP-A- 1 486 150
- EP-B- 1 331 868
- US-A- 5 794 519

## Description

La présente invention se rapporte à une machine à infuser, notamment mais non exclusivement pour la préparation du café, qui comprend un dispositif apte à éjecter une dose de produit infusé en dehors d'une chambre d'infusion après la préparation de la boisson.

Plus particulièrement, elle se rapporte à une machine à infuser comprenant dans un boîtier :
- une chambre d'infusion délimitée par une première partie présentant un logement recevant une dose de produit à infuser et une deuxième partie formant couvercle, lesdites première et deuxième parties étant mobiles l'une par rapport à l'autre entre une position de fermeture pour laquelle elles sont solidaires l'une de l'autre selon une surface de contact et une position d'ouverture pour laquelle elles sont écartées l'une de l'autre ; et
- un dispositif d'éjection de la dose de produit infusé comprenant un organe d'éjection qui est déplaçable par un mécanisme d'actionnement dans un plan sensiblement parallèle au plan moyen de ladite surface de contact.

La dose de produit à infuser, qu'elle se présente sous forme de mouture de café en vrac, ou de mouture emballée dans un sachet de papier filtre, ou encore sous forme d'une capsule rigide, pose des problèmes de manipulation par l'utilisateur après l'opération d'infusion, notamment du fait que cette dose est chaude et humide après le passage de l'eau à température élevée. Aussi, il a été proposé, pour les machines à infuser, et plus particulièrement les machines à café du type expresso, divers dispositifs permettant d'éjecter la dose de produit infusé vers un réceptacle de la machine, sans que l'utilisateur n'ait à manipuler la dose.

Par exemple, un tel dispositif d'éjection est connu du document EP-A-151 252 qui décrit un crochet monté coulissant et entourant partiellement la capsule de produit à infuser. Lors du mouvement d'ouverture de la chambre d'infusion, le crochet coulisse et éjecte la capsule, puis revient en position initiale. Toutefois, ce crochet d'éjection a l'inconvénient d'être situé à proximité immédiate de la capsule lors de l'opération d'infusion. Ceci pose d'une part des problèmes pour assurer une parfaite étanchéité de la chambre recevant la capsule, du fait de l'espace nécessairement limité entre le crochet et la capsule, et d'autre part, peut gêner le placement de la dose de produit dans la chambre d'infusion, notamment s'il s'agit de mouture de café en vrac.

D'autres dispositifs d'éjection mettant en oeuvre un mouvement plus ou moins complexe de basculement d'une partie de la chambre d'infusion ont également été proposés. Toutefois, ces dispositifs ne sont pas entièrement satisfaisants étant donné que le mouvement de basculement d'une partie de la chambre nécessite des mécanismes et des ajustages précis pour conserver les fonctions d'étanchéité et de canalisation de fluide de la chambre d'infusion. De plus, la partie basculante de la chambre d'infusion est réalisée sous la forme d'une pièce relativement massive et volumineuse dont le basculement nécessite une force relativement importante et/ou une prise en compte de phénomènes d'inertie.

Il existe aussi, dans les machines à café de type entièrement automatique utilisant de la mouture ou des grains en vrac, des dispositifs de balayage automatique de la galette de mouture infusée. L'intégration de tels dispositifs dans ces machines automatiques qui présentent un volume important, est relativement aisée. Par contre, lorsque l'on veut réduire la taille de la machine et obtenir un coût de fabrication relativement bas, ces dispositifs de balayage ne sont pas les plus appropriés.

La présente invention a pour but de fournir un dispositif d'éjection amélioré évitant toute manipulation du produit infusé par l'utilisateur, qui affecte le moins possible les caractéristiques d'étanchéité de la chambre d'infusion et la cinématique du système d'ouverture de la chambre.

A cet effet, la présente invention a pour objet une machine à infuser du type précité, caractérisée en ce que le dispositif d'éjection comprend en outre un volet escamotable monté mobile sur l'organe d'éjection entre une position escamotée dans laquelle il s'étend sensiblement contre celui-ci et une position de prise pour laquelle il fait saillie dudit organe d'éjection, et en ce que le mécanisme d'actionnement est apte à placer l'organe d'éjection en retrait des première et deuxième parties de la chambre en position de fermeture, et à commander au cours du passage de la position de fermeture à la position d'ouverture des première et deuxième parties de la chambre d'infusion :
- un déplacement aller de l'organe d'éjection au cours duquel le volet vient en position escamotée au contact de la dose et à la fin duquel ledit volet vient en position de prise par perte de contact avec la dose ; et
- un déplacement retour de l'organe d'éjection au cours duquel le volet en position de prise entraîne la dose en dehors de la chambre d'infusion.

Du fait des caractéristiques mentionnées ci-dessus du dispositif d'éjection, celui-ci n'interfère pas avec la chambre d'infusion lors de l'opération d'infusion, les première et deuxième parties de la chambre étant en position fermée. Ainsi, l'étanchéité de la chambre est parfaitement garantie. De plus, le déplacement retour de l'organe d'éjection entraîne la dose de produit infusé du même côté que cet organe, par exemple vers un bac de récupération situé sous cet organe d'éjection en position de retrait. Ceci est avantageux lorsque l'on veut conserver le plus d'espace libre possible autour de la chambre d'infusion.

Dans des modes de réalisation préférés de l'invention, on a recours, en outre, à l'une ou à l'autre des dispositions suivantes :
- l'organe d'éjection se présente globalement sous la forme d'une plaque montée coulissante horizontalement et présentant un bord antérieur sur lequel est monté articulé le volet escamotable ;
- la première partie de la chambre d'infusion comporte un piston monté coulissant entre une position d'infusion pour laquelle il délimite le logement de ladite première partie, et une position d'éjection pour laquelle il dégage au moins en partie la dose de produit infusé hors dudit logement, au moins lors du déplacement retour de l'organe d'éjection ; ainsi, grâce au piston en position d'éjection, la prise de la dose infusée par le volet et l'entraînement de celle-ci en dehors de la chambre d'infusion sont grandement facilités ;
- le volet escamotable présente une longueur au moins égale à la dimension de la dose de produit infusé mesurée perpendiculairement à la direction de déplacement de l'organe d'éjection, ce qui permet une bonne prise de la dose et évite qu'une fraction de la dose ne reste dans la chambre d'infusion ;
- le volet escamotable présente le long de son extrémité libre une échancrure centrale ayant de préférence le profil d'une courbe continue, ce qui permet au volet de s'escamoter au cours du déplacement aller de l'organe d'éjection en venant progressivement en contact avec la dose de produit infusé ;
- le volet escamotable est monté librement pivotant sur l'organe d'éjection, suivant un secteur angulaire déterminé de celui-ci, et présente un centre de gravité situé de manière à permettre au volet de venir naturellement en position de prise, ledit volet en position de prise étant sensiblement en butée à une extrémité dudit secteur angulaire de l'organe d'éjection ; ainsi, le dispositif d'éjection peut être réalisé avec un nombre réduit de pièces ;
- l'organe d'éjection comporte une projection présentant une surface réduite et formant une butée pour le volet lorsque celui-ci vient occuper sa position escamotée, ce qui évite un phénomène de collage du volet en position escamotée ;
- le mécanisme d'actionnement de l'organe d'éjection est apte à armer un organe élastique d'accumulation d'énergie au cours du déplacement aller de l'organe d'éjection, le déplacement retour dudit organe d'éjection étant effectué par le mécanisme d'actionnement uniquement sous l'effet de la libération d'énergie accumulée ; cette disposition permet de calibrer la force et la vitesse du déplacement retour de l'organe d'éjection à des valeurs prédéterminées et d'obtenir ainsi une éjection constante de la dose quelles que soient la force et la vitesse avec lesquelles le déplacement aller de l'organe d'éjection a été commandé ;
- le passage des première et deuxième parties de la chambre d'infusion de la position de fermeture à la position d'ouverture est effectué par déplacement manuel d'une poignée, et le mécanisme d'actionnement comporte un levier pivotant présentant, d'une part, une portion en prise avec l'organe d'éjection de manière à entraîner les déplacements aller et retour de celui-ci, et d'autre part, une butée avec laquelle coopère une patte liée à la poignée de manière à ce que le déplacement de la poignée vers la position d'ouverture de la chambre d'infusion entraîne le déplacement aller de l'organe d'éjection par pivotement dudit levier ;
- la butée du levier pivotant est agencée de manière à se dégager de la patte lorsque la poignée est proche de la position d'ouverture, de sorte que le levier effectue un pivotement en sens inverse sous l'effet de la libération de l'organe d'accumulation d'énergie, ladite butée étant effaçable au contact de la patte liée à la poignée lors du déplacement de celle-ci de la position d'ouverture vers la position de fermeture de la chambre d'infusion.

D'autres caractéristiques et avantages de l'invention ressortiront au cours de la description qui va suivre, donnée à titre d'exemple non limitatif, en référence aux dessins dans lesquels :
- la figure 1 est une représentation partielle en perspective arrachée d'une machine à infuser comprenant une poignée d'ouverture d'une chambre d'infusion et un dispositif d'éjection ;
- la figure 2 est une vue en coupe simplifiée selon la ligne II-II de la figure 1, la poignée étant en position de fermeture ;
- la figure 3 est une vue partielle de côté de la machine représentée à la figure 1, la poignée étant dans une première position intermédiaire entre les positions de fermeture et d'ouverture ;
- la figure 4 est une vue analogue à la figure 3, dans laquelle la poignée est dans une deuxième position intermédiaire entre les positions de fermeture et d'ouverture ;
- la figure 5 est une vue analogue à la figure 3, dans laquelle la poignée est dans une troisième position intermédiaire entre les positions de fermeture et d'ouverture ;
- la figure 6 est une vue analogue à la figure 3, dans laquelle la poignée est en position d'ouverture ;
- la figure 7 est une vue en perspective de dessous du dispositif d'éjection de la machine représentée à la figure 1 et comprenant un volet escamotable en position de prise ; et
- la figure 8 est une vue en coupe selon la ligne VIII-VIII de la figure 7, le volet étant en position escamotée.

Sur les différentes figures, des références identiques désignant des éléments identiques ou similaires.

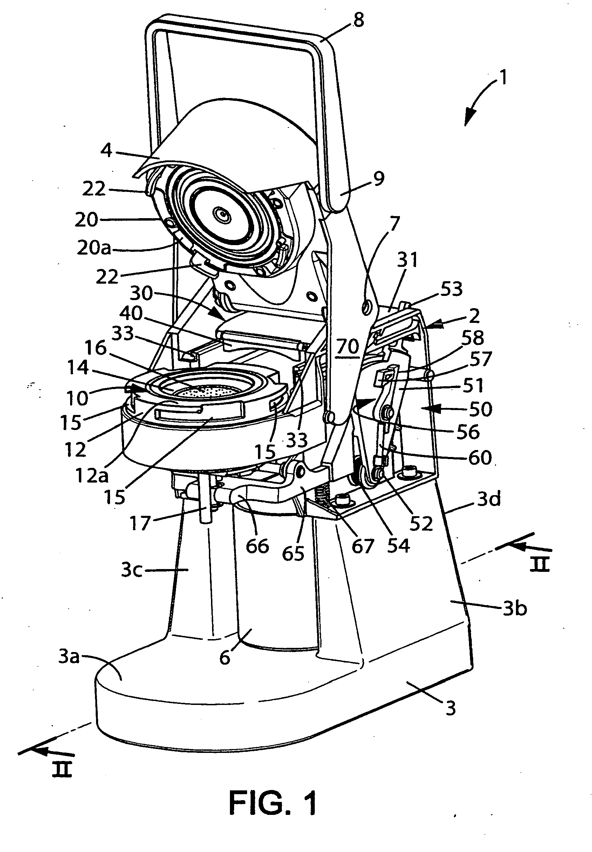

A la figure 1, est représentée une machine à infuser 1, et plus particulièrement une machine à café de type basse et haute pressions, c'est-à-dire comprenant une pompe, non représentée, qui délivre de l'eau chaude sous une pression de l'ordre de deux à quinze bars.

La machine 1 comprend un boîtier 2 formé par une base 3 et un couvercle 4. La base 3 du boîtier 2 présente, dans sa partie frontale, une surface de support 3a destinée à recevoir une tasse de café, des montants latéraux verticaux (3b, 3c) dans lesquels peuvent être logés les organes techniques de la machine, comme par exemple la chaudière, la pompe, l'électronique de commande, ainsi que les mécanismes de déplacement qui seront détaillés ci-après. La base 3 est prolongée à partir de la face arrière 3d par un réservoir d'eau et un support de ce réservoir, non représentés, un tel support pouvant recevoir également des organes techniques de la machine.

Entre les montants latéraux (3b, 3c) de la base 3 du boîtier, est disposé un réceptacle 6 destiné à recevoir, d'une manière automatique explicitée ci-après, les doses de produit infusé.

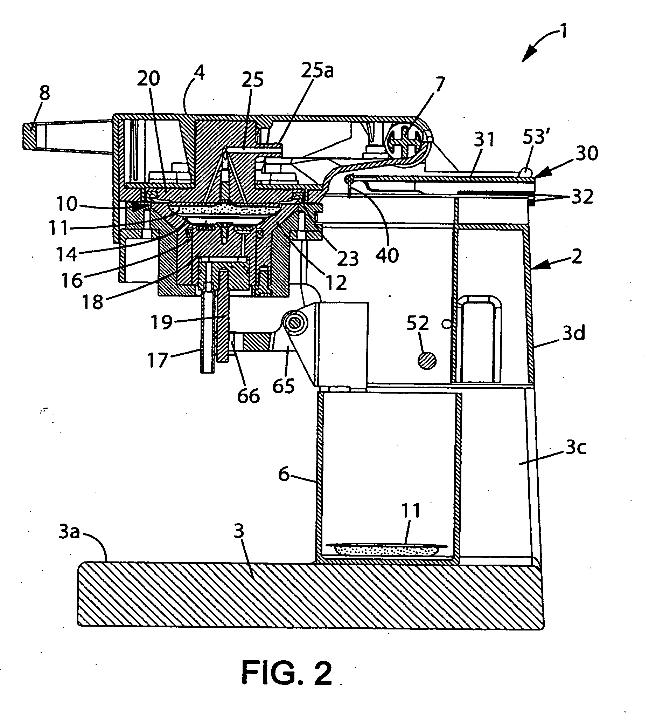

Dans le mode de réalisation représenté aux figures 1 et 2, le réceptacle 6 de doses de produit infusé est formé par un pot sensiblement cylindrique disposé de manière amovible entre les montants (3b, 3c) de manière à vider facilement son contenu.

Le couvercle 4 du boîtier est monté pivotant autour d'un axe 7 solidaire du boîtier 2. Le couvercle 4 est muni d'une poignée 8 qui permet de déplacer manuellement celui-ci depuis une position complètement ouverte, représentée à la figure 1, à une position fermée représentée à la figure 2, et inversement. Dans cet exemple, la poignée 8 présente une forme en "U" et est montée pivotante par rapport au couvercle 4 au niveau de points de pivotement 9 situés aux extrémités des branches du "U" de manière à effectuer un débattement angulaire limité par rapport au couvercle 4, débattement qui est mieux visible entre la figure 2 et les figures 3 à 6. Ce débattement angulaire de la poignée 8 est mis à profit pour assurer le verrouillage d'une chambre d'infusion 10. Mais bien entendu, il est parfaitement possible de prévoir une poignée 8 de forme sensiblement différente et solidaire du couvercle 4.

La chambre d'infusion 10 est destinée à recevoir une dose de produit à infuser 11, visible sur la figure 2. Dans le mode de réalisation représenté, la dose de produit à infuser 11 est constituée par un sachet à profil légèrement bombé, réalisé en papier filtre et contenant de la mouture de café non compacté, appelé dosette. Toutefois, la chambre d'infusion 10 peut être modifiée pour recevoir un produit à infuser se présentant sous une forme différente, comme une capsule rigide, voire sous forme de mouture en vrac. La nature du produit à infuser peut également être différente, comme par exemple du thé, du lait en poudre, du chocolat ou un mélange de ces produits.

La chambre d'infusion 10 est délimitée par une première partie 12 solidaire de la base 3 du boîtier 2 et présentant un logement 14 conformé pour recevoir la dose de produit à infuser 11. Cette première partie 12 de la chambre d'infusion présente une périphérie cylindrique qui est concentrique au logement 14, et qui est pourvue d'empreintes 15 destinées à assurer le verrouillage de la chambre d'infusion 10.

La première partie 12 de la chambre d'infusion 10 présente une face supérieure 12a (figure 1) sensiblement plane qui forme une surface de contact avec une deuxième partie 20 de la chambre d'infusion 10. La surface de contact 12a définit un plan horizontal dans le mode de réalisation représenté. Toutefois, il pourrait parfaitement s'agir d'une surface de contact plus complexe, présentant par exemple des gradins, et qui pourrait définir un plan moyen plus ou moins incliné par rapport à l'horizontal.

La première partie 12 de la chambre d'infusion 10 comporte de manière connue un fond perforé 16 définissant un espace de recueillement de l'infusion qui communique avec une pipe de sortie de l'infusion 17.

Plus particulièrement dans le mode de réalisation représenté à la figure 2, le fond perforé 16 et la pipe de sortie 17 sont portés par un piston 18 monté coulissant verticalement et de manière étanche dans la première partie 12 de la chambre d'infusion. Le piston 18 comporte une tige 19 s'étendant vers le bas et reliée à un mécanisme d'entraînement, détaillé par la suite, permettant un déplacement du piston 18 entre une position d'infusion pour laquelle il délimite le logement 14, et une position d'éjection pour laquelle il dégage la dose 11 hors du logement 14.

La deuxième partie 20 de la chambre d'infusion 10 est liée au couvercle 4 du boîtier 2 et est donc mobile par rapport à la première partie 12. Cette deuxième partie 20 de la chambre d'infusion présente une face inférieure 20a (figure 1) sensiblement plane et une périphérie cylindrique qui est dotée de crochets 22 destinés à venir en prise avec les empreintes 15 pour assurer le verrouillage de la chambre d'infusion 10. Plus particulièrement, les crochets 22 sont entraînés en rotation par un renvoi d'angle relié aux points de pivotement 9 de la poignée 8 de sorte que, lorsque le couvercle 4 est abaissé en position fermée, les crochets 22 pénètrent dans les empreintes 15, puis pivotent sous l'effet du débattement angulaire de la poignée 8. On obtient alors une position de fermeture de la chambre d'infusion dans laquelle les deux parties (12, 20) de ladite chambre 10 sont solidaires l'une de l'autre et en contact étanche par l'intermédiaire de la surface de contact 12a de la première partie 12 avec la portion correspondante de la face inférieure 20a de la deuxième partie 20. Un joint souple 23 (figure 2) est agencé sur la face inférieure 20a de la deuxième partie 20 pour améliorer cette étanchéité.

Lorsque la chambre d'infusion 10 est en position de fermeture, comme illustré à la figure 2, l'opération d'infusion est réalisée en l'alimentant par l'intermédiaire d'un conduit 25 interne à la deuxième partie 20 qui est connectée à son extrémité extérieure 25a à un tube flexible, non représenté, communiquant avec une pompe et une chaudière.

La machine à café 1 comporte également un dispositif d'éjection 30 adapté à éjecter automatiquement la dose de produit infusé 11 lors du mouvement de la position de fermeture vers la position d'ouverture de la chambre d'infusion 10.

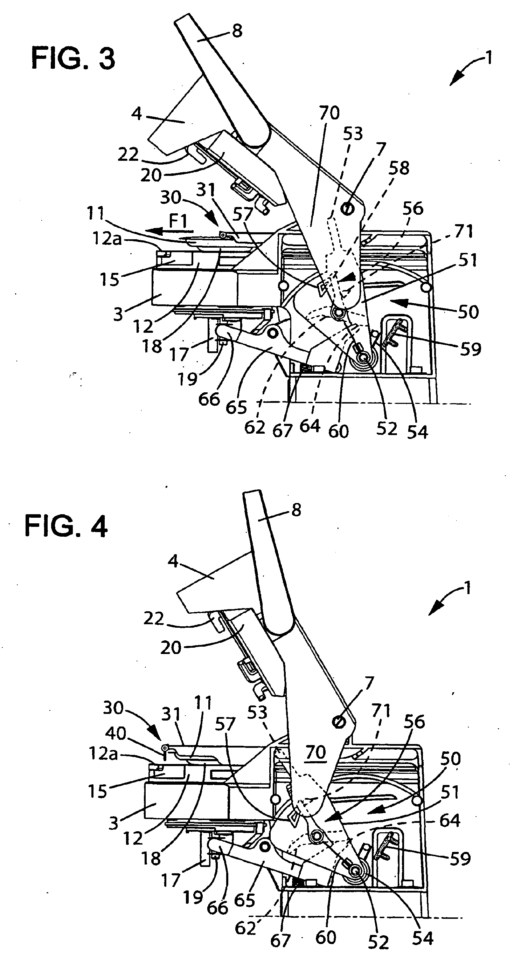

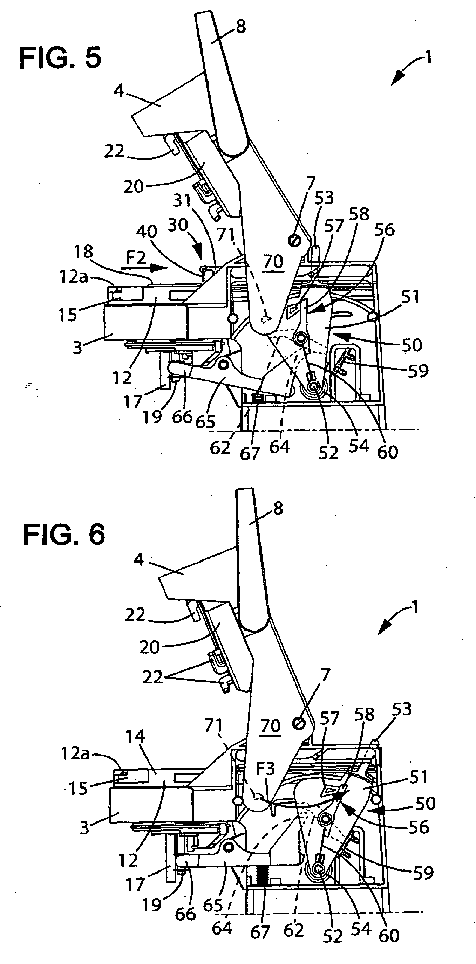

Le dispositif d'éjection 30 comporte un organe d'éjection 31 qui est déplaçable par un mécanisme d'actionnement 50, dont un mode de réalisation sera détaillé ci-après. Le mécanisme d'actionnement 50 est apte, d'une part, à placer l'organe d'éjection 31 en retrait des première 12 et deuxième 20 parties de la chambre d'infusion 10 en position de fermeture telle que représentée à la figure 2, et d'autre part, à commander au cours du passage de la position de fermeture à la position d'ouverture complète de la chambre d'infusion 10, ou du moins lors d'une partie de ce passage, un déplacement aller (flèche F1, figure 3) de l'organe d'éjection 31 depuis la position en retrait représentée à la figure 2 jusqu'à une position avancée maximale vers la face frontale représentée à la figure 4, et un déplacement retour de l'organe d'éjection 31 (flèche F2, figure 5).

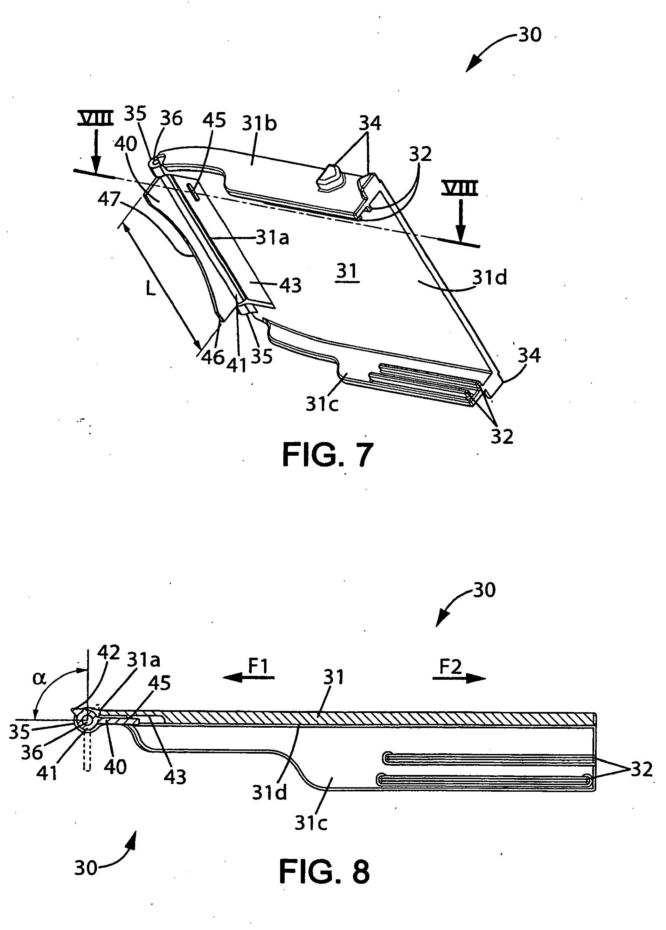

L'organe d'éjection 31, mieux visible aux figures 7 et 8, se présente globalement sous la forme d'une plaque présentant un bord antérieur 31a (figure 8) situé du côté de la face frontale de la machine 1, et des bords latéraux formés par des ailes (31b, 31c) s'étendant vers le bas. Les ailes (31b, 31c) présentent chacune sur leur face intérieure deux nervures 32 s'étendant parallèlement au plan de la plaque 31. Chaque paire de nervures 32 coopère avec une nervure complémentaire 33 (figure 1) formée dans la base 3 du boîtier 2. Les nervures 33 du boîtier 2 sont agencées pour guider le coulissement de l'organe d'éjection 31 selon un mouvement alternatif de translation horizontale. D'autre part, chaque aile latérale (31b, 31c) comporte sur sa face extérieure une paire d'ergots 34 formant une fourchette venant en prise avec le mécanisme d'actionnement 50 et par laquelle le déplacement de l'organe d'éjection 31 est commandé positivement.

Le mouvement alternatif de translation, ou mouvements aller F1 et retour F2, est orienté radialement par rapport à la chambre d'infusion 10 et compris dans un plan parallèle au plan moyen défini par la surface de contact 12a de la première partie 12 de cette chambre. Ce mouvement alternatif est effectué au-dessus de cette surface de contact 12a de manière à ce que l'organe d'éjection 31 ne vienne buter ni dans la première partie 12 de la chambre, ni dans la dose de produit à infuser 11 au cours du déplacement aller lorsqu'il vient recouvrir le logement 14. On préférera toutefois que l'organe d'éjection 31 ne soit pas situé à une distance excessive au-dessus de la première partie 12 de la chambre d'infusion.

Il apparaîtra clairement que la réalisation, le guidage et l'entraînement de l'organe d'éjection 31 peuvent prendre des formes différentes. A titre d'exemple, l'organe d'éjection pourrait prendre la forme d'un bras monté pivotant entraîné par un engrenage, du moment que cet organe puisse effectuer le déplacement aller-retour décrit ci-dessus.

Dans l'exemple de réalisation représenté aux figures 7 et 8, l'organe d'éjection 31 présente aux extrémités de son bord antérieur 31a des consoles 35 portant un axe 36 s'étendant parallèlement à ce bord antérieur 31a. Un volet escamotable 40 est monté mobile autour de cet axe 36 entre une position escamotée, représentée aux figures 3 et 8, dans laquelle il s'étend sensiblement contre la face inférieure 31d de cet organe 31, et une position dite de prise, visible aux figures 1, 2, 4, 5 et 7, pour laquelle il fait saillie par rapport à l'organe d'éjection 31. Dans le mode de réalisation représenté, la position de prise que peut occuper le volet 40 correspond à une position pour laquelle le volet 40 s'étend sensiblement perpendiculairement au plan de l'organe d'éjection 31 et vers le bas par rapport à celui-ci. Ainsi, l'encombrement vertical du volet 40 est très fortement diminué lorsqu'il passe de sa position de prise à sa position escamotée.

Comme cela est visible aux figures 7 et 8, le volet 40 est monté articulé sur l'organe d'éjection 31 par l'intermédiaire d'une portion tubulaire 41 s'étendant le long du bord du volet adjacent à l'organe d'éjection et entourant l'axe 36 de celui-ci. Ainsi, le volet 40 est librement pivotant et prend naturellement sous l'effet de la gravité la position de prise représentée en pointillés à la figure 8, étant donné que son centre de gravité est décalé par rapport à l'axe 36.

Toutefois, le débattement angulaire du volet 40 est limité à un angle α d'environ 90 degrés, comme montré à la figure 8, du fait de son contact avec la face inférieure 31d de l'organe d'éjection 31 lorsqu'il est en position escamotée, et du fait du contact d'une butée 42 solidaire du volet 40 avec le bord antérieur 31a de l'organe d'éjection. Par conséquent, en référence à la figure 8, lorsque l'organe d'éjection 31 effectue le déplacement retour indiqué par la flèche F2, le volet ne peut pas tourner dans le sens horaire au-delà de sa position de prise représentée en pointillés, notamment lorsqu'il vient en contact avec la dose de produit infusé 11. Le montage du volet 40 ainsi réalisé est particulièrement simple, mais bien entendu le volet 40 pourrait être monté mobile par rapport à l'organe d'éjection 31 d'une autre manière, par exemple par une charnière plastique. Des moyens élastiques peuvent être également prévus, par exemple pour rappeler le volet en position de prise.

L'organe d'éjection 31, figures 7 et 8, présente sur sa face inférieure 31d une dépression 43 couvrant l'étendue de la zone en regard de laquelle est situé le volet en position escamotée. Ainsi, dans cette position escamotée, la hauteur occupée par le volet 40 et la portion avant de la plaque 31 formant l'organe d'éjection, est sensiblement égale à la hauteur du reste de cette plaque, rendant ainsi l'ensemble peu encombrant.

Comme cela est mieux visible aux figures 7 et 8, la dépression 43 de l'organe d'éjection 31 comporte une projection 45 de section réduite et de faible hauteur. La projection 45 crée une surface de contact entre l'organe d'éjection 31 et le volet 40 en position escamotée qui est très réduite, et en tout état de cause très inférieure à la surface du volet. Ceci permet d'éviter un phénomène de collage du volet 40 en position escamotée contre l'organe d'éjection 31, un tel collage pouvant se produire lorsque la dépression 43 est mouillée par des gouttes d'eau tombant de la deuxième partie 20 de la chambre d'infusion. Or, comme cela apparaîtra par la suite, il est important d'éviter un tel collage pour que le dispositif d'éjection soit fiable. Bien entendu, la fonction de la projection 45 du mode de réalisation représenté peut être réalisée de manière équivalente par une projection solidaire du volet 40 et agencée pour venir en contact avec l'organe d'éjection 31 pour la position escamotée du volet 40.

Le mécanisme d'actionnement 50 de l'organe d'éjection 31 comporte, comme cela est visible aux figures 3 à 6, un levier pivotant 51 monté sur un axe 52 fixe par rapport à la base 3 du boîtier. Le levier 51 s'étend à partir de cet axe 52 sous forme d'un secteur angulaire et est prolongé par un doigt 53 qui vient en prise entre la paire d'ergots 34 de l'organe d'éjection 31, de sorte que tout pivotement du levier 51 entraîne un mouvement de translation correspondant de l'organe d'éjection 31. Un levier pivotant identique, dont le doigt 53' est visible sur la figure 2, est prévu dans le montant latéral opposé 3c de la base du boîtier 2 et est entraîné avec le levier 51 par l'intermédiaire de l'axe 52, dans le but d'appliquer des efforts symétriques à l'organe d'éjection 31.

Le levier pivotant 51 est équipé d'un organe élastique d'accumulation d'énergie 54, visible sur la figure 1, qui est ici réalisé sous la forme d'un ressort de torsion entourant l'axe 52, dont l'une des extrémités est en prise avec la base 3 du boîtier et dont l'autre extrémité est en prise avec le levier pivotant 51. L'organe élastique 54 est agencé de manière à solliciter constamment le levier pivotant 51 vers la face arrière 3d du boîtier de sorte que le levier 51 prend naturellement une position initiale représentée aux figures 1 et 6, pour laquelle il est en appui contre une butée 59 (figure 6). On notera que, lorsque le levier 51 est pivoté vers la face frontale de la machine pour atteindre la position représentée à la figure 4, l'organe élastique 54 emmagasine une énergie supplémentaire déterminée, et la force de rappel vers la position arrière du levier 51 atteint alors une valeur maximale sensiblement constante quelle que soit la vitesse ou la force avec laquelle le levier 51 a été pivoté.

Le levier pivotant 51 comporte une butée effaçable 56 agencée sur sa face extérieure et également visible sur la figure 1. La butée effaçable 56 comprend un plot 57 solidaire du levier 51, une languette 58 montée pivotante autour d'un axe par rapport au levier 51 et une lame élastique 60 sollicitant la languette contre le plot 57. Sur la face intérieure du levier pivotant 51 est formé un chemin de came 62 coopérant avec une came 64 formée à l'extrémité d'une bascule 65, l'autre extrémité 66 de la bascule étant en prise avec la tige 19 du piston 18. L'action sur la came 64 comprime un ressort 67 situé sous la bascule 65, ce qui permet de rappeler le piston 18 en position abaissée, c'est-à-dire en position d'infusion.

Le couvercle 4 du boîtier 2 est prolongé par une patte 70 s'étendant à l'intérieur de la base 3, étant entendu que le montant latéral 3b du boîtier est fermé par une plaque non représentée à la figure 1. La patte 70 est déplacée en même temps que le couvercle 4 lorsqu'un utilisateur agit la poignée 8. La patte 70 coopère avec le mécanisme d'actionnement 50 par l'intermédiaire d'un ergot 71 solidaire de celle-ci et faisant saillie sur sa face interne. Plus particulièrement, l'ergot 71 de la patte 70 est apte à coopérer avec la butée effaçable 56 du levier 51 au cours d'une partie du mouvement, puis à se dégager de cette butée 56, et enfin, à venir écarter la languette 58 de la butée effaçable pour venir à nouveau en prise avec celle-ci du côté opposé au plot 57, comme cela sera explicité ci-après au cours d'une description d'une séquence automatique d'éjection d'une dose de produit infusé.

Après une opération d'infusion, ici la préparation d'un café, la chambre d'infusion 10 est en position de fermeture, comme représenté à la figure 2. On notera que dans cette position, le couvercle 4 est également en position fermée et que le dispositif d'éjection 30 est en position reculée avec le volet escamotable 40 en position de prise et situé au-dessus du réceptacle de doses de produit infusé 6.

A partir de cette position, l'utilisateur exerce sur la poignée 8 une force vers le haut, ce qui entraîne un déplacement angulaire de la poignée 8 par rapport au couvercle 4 et un déverrouillage de la chambre 10 par désengagement rotatif des crochets 22 hors de leurs empreintes associées 15.

En poursuivant l'effort vers le haut, l'utilisateur provoque un pivotement du couvercle 4 autour de son axe 7, et par conséquent un pivotement correspondant de la patte 70. La patte 70 agit alors par l'intermédiaire de son ergot 71 sur la butée effaçable 56, et plus précisément sur la languette 58 de cette butée qui est en appui contre le plot 57 du levier pivotant 51. Le levier 51 pivote donc en sens anti-horaire sur les figures du fait de sa coopération par contact avec la patte 70 reliée à la poignée 8, pour atteindre une première position intermédiaire représentée à la figure 3.

Lors du pivotement du levier 51, le chemin de came 62 du levier 51 vient en contact avec la came 64 de la bascule 65, ce qui provoque une élévation du piston 18 vers la position d'éjection, et par conséquent un dégagement de la dose de produit à infuser 11 du logement 14 de la première partie 12 de la chambre 10. Simultanément, l'organe d'éjection 31 entraîné par le doigt 53 du levier 51 effectue un déplacement horizontal aller, indiqué par la flèche F1 sur la figure 3, en direction de la face frontale de la machine et en venant recouvrir partiellement à ce moment le logement 14 de la chambre d'infusion. Le volet escamotable 40 entre alors en contact avec la dose de produit infusé 11 et est déplacé par celle-ci vers sa position escamotée du fait de son montage librement pivotant.

On notera que le volet 40 présente un bord libre 46, visible à la figure 7, opposé au bord adjacent à l'organe d'éjection 31. Le bord libre 46 présente en son centre une échancrure 47 en arc de cercle qui lui permet d'entrer en contact progressif avec la dose de produit 11 au cours du déplacement aller F1. En effet, la dose de produit 11 présente généralement un profil légèrement bombé et une fine collerette périphérique. Grâce à son échancrure 47, le volet 40 vient en contact tout d'abord par deux points espacés de la collerette de la dose et selon une direction formant un angle aigu avec celle-ci. Puis le sommet de l'échancrure 47 du volet vient en contact avec le sommet de la dose bombée 11, mais le volet 40 est alors déjà sensiblement incliné par rapport à l'horizontal. Ainsi, le passage à la position escamotée du volet 40 est facilité et on ne risque pas que la dose 11 soit poussée vers la face frontale de la machine au cours du déplacement aller de l'organe d'éjection 31.

Le déplacement aller de l'organe d'éjection 31 se poursuit de la position représentée à la figure 3 pour atteindre la position maximale avancée représentée à la figure 4, et ce sans déplacer la dose de produit 11 du fait de l'escamotage du volet 40. Dans la configuration représentée à la figure 4, le couvercle 4 est dans une deuxième position intermédiaire, mais n'a pas encore atteint la position d'ouverture maximale de la chambre d'infusion 10. Peu avant d'atteindre cette position, le volet escamotable 40 perd le contact avec la dose de produit 11, et ce d'autant plus tôt que l'échancrure 47 est plus profonde, étant donné la forme circulaire de la dose de produit 11. Le volet 40 prend alors sa position de prise sous l'effet de son propre poids, comme représenté à la figure 4. On notera également que dans cette position, le piston 18 est toujours en position d'éjection grâce au profil choisi pour le chemin de came 62 du levier 51. L'ergot 71 de la patte 70 glisse le long de la butée escamotable 56 et arrive à proximité de l'extrémité de celle-ci dans la position avancée maximale.

En poursuivant quelque peu l'action sur la poignée 8, l'ergot 71 de la patte 70 se dégage de la butée escamotable 56 du levier 51. Le levier 51 pivote alors en sens horaire sous l'effet de l'organe élastique d'accumulation d'énergie 54, et entraîne, par l'intermédiaire de son doigt 53, l'organe d'éjection 31 selon un déplacement horizontal retour au cours duquel le mécanisme prend de manière instantanée la configuration représentée à la figure 5. Au cours de ce mouvement de retour indiqué par la flèche F2, le volet escamotable 40 demeure en position de prise du fait de son débattement angulaire limité et entraîne alors la dose de produit 11 vers la face arrière 3d de la machine, ce qui provoque la chute de la dose dans le réceptacle 6.

On notera que les dimensions du volet escamotable 40 sont adaptées pour assurer une prise importante avec la dose de produit 11, ce qui est possible notamment du fait de la position escamotée du volet 40 et de la position reculée du dispositif d'éjection 30 lors de l'opération d'infusion. De préférence, le volet 40 (figure 7) présente une longueur L, mesurée le long du bord antérieur 31a de l'organe d'éjection 31, qui est égale à la dimension de la dose de produit 11 mesurée perpendiculairement à la direction de déplacement de l'organe d'éjection 31 et parallèlement au plan de la surface de contact 12a de la première partie 12 de la chambre d'infusion 10.

A la fin du déplacement retour de l'organe d'éjection 31, le levier 51 reprend sa position initiale représentée à la figure 6 en venant en contact contre la butée 59, c'est-à-dire dans une position identique à celle obtenue lorsque la chambre d'infusion 10 est en position de fermeture telle que représentée à la figure 2. Toutefois, le couvercle 4 est alors en position d'ouverture maximale et la patte 70 de celui-ci ne coopère plus avec la butée effaçable 56 du levier 51. Pour permettre le retour à la position fermée du couvercle 4, le plot 57 et la languette 58 sont agencés par rapport au trajet effectué par l'ergot 71, indiqué par la flèche F3 sur la figure 6, de manière à ce que celui-ci entraîne un pivotement horaire de la languette 58 et passe à droite de celle-ci pour la configuration représentée à la figure 6. Le cycle d'ouverture incorporant l'éjection automatique de la dose de produit infusé peut alors être recommencé.

Le mode de réalisation décrit ci-dessus n'est nullement limitatif et diverses modifications peuvent être apportées sans sortir du cadre de la présente invention. On notera que le mécanisme d'actionnement peut être réalisé de manière différente dès lors qu'il est apte à entraîner des déplacements aller et retour de l'organe d'éjection. Il pourrait par exemple s'agir d'engrenages ou d'ergots circulant le long de rainures. Toutefois, le fait de faire appel à des coopérations par contact entre des pièces offre l'avantage d'une grande possibilité d'adaptation des lois cinématiques des pièces et assure un fonctionnement fiable, malgré les phénomènes d'usure ou de dispersion des dimensions des pièces, étant donné que de simples ressorts permettent de rattraper d'éventuels jeux.

Par ailleurs, le mode de réalisation décrit fait appel à un entraînement manuel pour le déplacement aller et un déplacement retour automatique calibré par un moyen d'accumulation d'énergie. Il est parfaitement envisageable de prévoir que le déplacement retour soit commandé manuellement, ou encore que l'ensemble du fonctionnement du mécanisme d'actionnement soit automatique par exemple en faisant appel à un moteur électrique ou à un vérin hydraulique pour commander au moins le déplacement aller de l'organe d'éjection.

## Revendications

1. Machine à infuser comprenant dans un boîtier :
- une chambre d'infusion (10) délimitée par une première partie (12) présentant un logement (14) recevant une dose de produit à infuser (11) et une deuxième partie (20) formant couvercle, lesdites première et deuxième parties (12, 20) étant mobiles l'une par rapport à l'autre entre une position de fermeture pour laquelle elles sont solidaires l'une de l'autre selon une surface de contact (12a) et une position d'ouverture pour laquelle elles sont écartées l'une de l'autre ; et
- un dispositif d'éjection (30) de la dose de produit infusé (11) comprenant un organe d'éjection (31) qui est déplaçable par un mécanisme d'actionnement (50) dans un plan sensiblement parallèle au plan moyen de ladite surface de contact (12a),
**caractérisée en ce que** le dispositif d'éjection (30) comprend en outre un volet escamotable (40) monté mobile sur l'organe d'éjection (31) entre une position escamotée dans laquelle il s'étend sensiblement contre celui-ci et une position de prise pour laquelle il fait saillie dudit organe d'éjection (31),
et **en ce que** le mécanisme d'actionnement (50) est apte à placer l'organe d'éjection (31) en retrait des première et deuxième parties (12, 20) de la chambre (10) en position de fermeture, et à commander au cours du passage de la position de fermeture à la position d'ouverture des première (12) et deuxième (20) parties de la chambre d'infusion :
- un déplacement aller (F1) de l'organe d'éjection (31) au cours duquel le volet (40) vient en position escamotée au contact de la dose (11) et à la fin duquel ledit volet vient en position de prise par perte de contact avec la dose (11) ; et
- un déplacement retour (F2) de l'organe d'éjection (31) au cours duquel le volet (40) en position de prise entraîne la dose (11) en dehors de la chambre d'infusion (10).

2. Machine selon la revendication 1, dans laquelle l'organe d'éjection (31) se présente globalement sous la forme d'une plaque montée coulissante horizontalement et présentant un bord antérieur (31a) sur lequel est monté articulé le volet escamotable (40):

3. Machine selon la revendication 1 ou 2, dans laquelle la première partie (12) de la chambre d'infusion (10) comporte un piston (18) monté coulissant entre une position d'infusion pour laquelle il délimite le logement (14) de ladite première partie, et une position d'éjection pour laquelle il dégage au moins en partie la dose de produit infusé (11) hors dudit logement (14), au moins lors du déplacement retour (F2) de l'organe d'éjection (31).

4. Machine selon l'une quelconque des revendications 1 à 3, dans laquelle le volet escamotable (40) présente une longueur (L) au moins égale à la dimension de la dose de produit infusé (11) mesurée perpendiculairement à la direction de déplacement de l'organe d'éjection (31).

5. Machine selon l'une quelconque des revendications précédentes, dans laquelle le volet escamotable (40) présente le long de son extrémité libre (46) une échancrure centrale (47) ayant de préférence le profil d'une courbe continue.

6. Machine selon l'une quelconque des revendications précédentes, dans laquelle le volet escamotable (40) est monté librement pivotant sur l'organe d'éjection (31), suivant un secteur angulaire déterminé de celui-ci, et présente un centre de gravité situé de manière à permettre au volet (40) de venir naturellement en position de prise, ledit volet (40) en position de prise étant sensiblement en butée à une extrémité dudit secteur angulaire de l'organe d'éjection.

7. Machine selon l'une quelconque des revendications précédentes, dans laquelle l'organe d'éjection (31) comporte une projection (45) présentant une surface réduite et formant une butée pour le volet (40) lorsque celui-ci vient occuper sa position escamotée.

8. Machine selon l'une quelconque des revendications précédentes, dans laquelle le mécanisme d'actionnement (50) de l'organe d'éjection (31) est apte à armer un organe élastique d'accumulation d'énergie (54) au cours du déplacement aller (F1) de l'organe d'éjection (31), le déplacement retour (F2) dudit organe d'éjection (31) étant effectué par le mécanisme d'actionnement (50) uniquement sous l'effet de la libération d'énergie accumulée.

9. Machine selon l'une quelconque des revendications précédentes, dans laquelle le passage des première et deuxième parties (12, 20) de la chambre d'infusion (10) de la position de fermeture à la position d'ouverture est effectué par déplacement manuel d'une poignée (8), et le mécanisme d'actionnement (50) comporte un levier pivotant (51) présentant, d'une part, une portion (53) en prise avec l'organe d'éjection (51) de manière à entraîner les déplacements aller (F1) et retour (F2) de celui-ci, et d'autre part, une butée (56) avec laquelle coopère une patte (70) liée à la poignée (8) de manière à ce que le déplacement de la poignée (8) vers la position d'ouverture de la chambre d'infusion (10) entraîne le déplacement aller de l'organe d'éjection (31) par pivotement dudit levier (51).

10. Machine selon les revendications 8 et 9, dans laquelle la butée (56) du levier pivotant (51) est agencée de manière à se dégager de la patte (70) lorsque la poignée (8) est proche de la position d'ouverture de sorte que le levier (51) effectue un pivotement en sens inverse sous l'effet de la libération de l'organe d'accumulation d'énergie (54), ladite butée (56) étant effaçable au contact de la patte (70) liée à la poignée (8) lors du déplacement de celle-ci de la position d'ouverture vers la position de fermeture de la chambre d'infusion (10).

## Claims

1. Infusion machine comprising, in a housing:
- an infusion chamber (10) delimited by a first part (12) having a housing (14) receiving a dose of product to be infused (11) and a second part (20) forming a lid, the said first and second parts (12, 20) being able to move with respect to each other between a closed position in which they are secured to each other on a contact surface (12a) and an open position in which they are separated from each other; and
- a device (30) for ejecting the dose of infused product (11) comprising an ejection member (31) that can be moved by an actuation mechanism (50) in a plane substantially parallel to the mid-plane of the said contact surface (12a),
**characterised in that** the ejection device (30) also comprises a retractable flap (40) mounted so as to be able to move on the ejection member (31) between a retracted position in which it extends substantially against the latter and an engagement position in which it projects from the said ejection member (31),
and **in that** the actuation mechanism (50) is able to place the ejection member (31) so as to be recessed from the first and second parts (12, 20) of the chamber (10) in the closed position, and to command, during the passage from the closed position to the open position of the first (12) and second (20) parts of the infusion chamber:
- an outward movement (F1) of the ejection member (31) during which the flap (40) comes in the retracted position in contact with the dose (11) and at the end of which the said flap comes into the engagement position by loss of contact with the dose (11); and
- a return movement (F2) of the ejection member (31) during which the flap (40) in the engagement position drives the dose (11) out of the infusion chamber (10).

2. Machine according to claim 1, in which the ejection member (31) is roughly in the form of a plate mounted so as to slide horizontally and having an anterior edge (31a) on which the retractable flap (40) is mounted articulated.

3. Machine according to claim 1 or 2, in which the first part (12) of the infusion chamber (10) comprises a piston (18) mounted so as to slide between an infusion position in which it delimits the housing (14) of the said first part and an ejection position in which it at least partly clears the dose of infused product (11) out of the said housing (14), at least during the return movement (F2) of the ejection member (31).

4. Machine according to any one of claims 1 to 3, in which the retractable flap (40) has a length (L) at least equal to the dimension of the dose of infused product (11) measured perpendicular to the direction of movement of the ejection member (31).

5. Machine according to any one of the preceding claims, in which the retractable flap (40) has, along its free end (46), a central scallop (47) preferably having the profile of a continuous curve.

6. Machine according to any one of the preceding claims, in which the retractable flap (40) is mounted so as to pivot freely on the ejection member (31), on a given angular sector thereof, and has a centre of gravity situated so as to enable the flap (40) to come naturally into the engagement position, the said flap (40) in the engagement position being substantially in abutment at one end of the said angular sector of the ejection member.

7. Machine according to any one of the preceding claims, in which the ejection member (31) comprises a projection (45) having a reduced surface and forming a stop for the flap (40) when the latter comes to occupy its retracted position.

8. Machine according to any one of the preceding claims, in which the actuation mechanism (50) for the ejection member (31) is able to arm an elastic energy accumulation member (54) during the outward movement (F1) of the ejection member (31), the return movement (F2) of the said ejection member (31) being effected by the actuation mechanism (50) solely under the effect of the release of accumulated energy.

9. Machine according to any one of the preceding claims, in which the passage of the first and second parts (12, 20) of the infusion chamber (10) from the closed position to the open position is effected by manual movement of a handle (8), and the actuation mechanism (50) comprises a pivoting lever (51) having firstly a portion (53) in engagement with the ejection member (51) so as to cause the outward (F1) and return (F2) movements thereof, and secondly a stop (56) with which a lug (70) connected to the handle (8) cooperates so that the movement of the handle (8) towards the open position of the infusion chamber (10) causes the outward movement of the ejection member (31) by pivoting of the said lever (51).

10. Machine according to claims 8 and 9, in which the stop (56) of the pivoting lever (51) is arranged so as to disengage from the lug (70) when the handle (8) is close to the open position so that the lever (51) performs a pivoting in the reverse direction under the effect of the release of the energy accumulation member (54), the said stop (56) being retractable in contact with the lug (70) connected to the handle (8) during the movement thereof from the open position to the closed position of the infusion chamber (10).

## Patentansprüche

1. Aufgussvorrichtung, welche in einem Gehäuse umfasst:
- eine Aufgusskammer (10), die durch ein erstes Teil (12), welches eine Aufnahme (14) zum Aufnehmen einer Dosis eines Aufgussproduktes (11) bildet, und ein zweites Teil (20), das eine Abdeckung bildet, eingegrenzt ist, wobei das erste und das zweite Teil (12, 20) relativ zueinander zwischen einer Schließposition, bei der sie entlang einer Kontaktfläche (12a) zusammengefügt sind, und einer Öffnungsposition, bei der sie voneinander getrennt sind, beweglich sind; und
- eine Ausstoßvorrichtung (30) der Dosis des Aufgussproduktes (11) mit einem Ausstoßelement (31), das durch einen Betätigungsmechanismus (50) in einer Ebene verschiebbar ist, welche im Wesentlichen parallel zur mittleren Ebene der Kontaktfläche (12a) ist,
**dadurch gekennzeichnet, dass** die Ausstoßvorrichtung (30) ferner eine ausrückbare Klappe (40) aufweist, die auf dem Ausstoßelement (31) zwischen einer ausgerückten Position, in der sie sich im Wesentlichen gegen dasselbe erstreckt, und einer Entnahmeposition, in der sie das Ausstoßelement (31) vorstehen lässt, bewegt,
**und dass** der Betätigungsmechanismus (50) dazu geeignet ist, das Ausstoßelement (31) von dem ersten und dem zweiten Teil (12, 20) der Kammer (10) in eine Schließposition zurückzuziehen und im Laufe des Übergangs von der Schließposition in die Öffnungsposition des ersten und des zweiten Teils (12, 20) der Aufgusskammer zu steuern:
- eine Hinweg-Verschiebung (F1) des Ausstoßelements (31), im Laufe derer die Klappe (40) in der vorgerückten Position in Kontakt mit der Dosis (11) kommt und an deren Ende die Klappe in eine Entnahmeposition kommt, bei der der Kontakt mit der Dosis (11) verloren geht; und
- eine Rückweg-Verschiebung (F2) des Ausstoßelements (31), im Laufe derer die Klappe (40) in der Entnahmeposition die Dosis (11) aus der Aufgusskammer (10) heraus mitnimmt.

2. Vorrichtung nach Anspruch 1, wobei das Ausstoßelement (31) im Wesentlichen die Form einer Platte hat, die horizontal gleitend montiert ist und einen vorderen Rand (31 a) hat, an dem die vorrückbare Klappe (40) gelenkig montiert ist.

3. Vorrichtung nach Anspruch 1 oder 2, wobei der erste Teil (12) der Aufgusskammer (10) einen Kolben (18) trägt, der zwischen einer Aufgussposition, bei der er die Aufnahme (14) des ersten Teils begrenzt, und eine Ausstoßposition, bei der er die Dosis des Aufgussprodukts (11) wenigstens teilweise aus der Aufnahme (14) herauslöst, wenigstens während der Rückweg-Verschiebung (F2) des Ausstoßelements (31), montiert ist.

4. Vorrichtung nach einem der Ansprüche 1 bis 3, wobei die vorrückbare Klappe (40) eine Länge (L) hat, die mindestens gleich der Abmessung der Dosis des Aufgussproduktes (11), gemessen senkrecht zur Verschieberichtung des Ausstoßelements (31) ist.

5. Vorrichtung nach einem der vorangehenden Ansprüche, wobei die vorrückbare Klappe (40) entlang ihres freien Endes (46) eine mittlere Ausnehmung (47) aufweist, die vorzugsweise das Profil einer kontinuierlichen Kurve hat.

6. Vorrichtung nach einem der vorangehenden Ansprüche, wobei die vorrückbare Klappe (40) frei schwenkbar auf dem Ausstoßelement (31) montiert ist, wobei sie einem durch dieses bestimmten Kreissektor folgt und einen Schwerpunkt hat, der so angeordnet ist, dass die Klappe (40) von selbst in die Entnahmeposition kommt, wobei die Klappe (40) in der Entnahmeposition im Wesentlichen gegen ein Ende des Kreissektors des Ausstoßelements zu liegen kommt.

7. Vorrichtung nach einem der vorangehenden Ansprüche, wobei das Ausstoßelement (31) einen Vorsprung (45) trägt, der eine reduzierte Oberfläche aufweist und einen Anschlag für die Klappe (40) bildet, wenn diese ihre vorgerückte Position einnimmt.

8. Vorrichtung nach einem der vorangehenden Ansprüche, wobei der Betätigungsmechanismus (50) des Ausstoßelements (31) dazu eingerichtet ist, ein elastisches Organ zum Aufbauen von Energie (34) im Laufe der Hinweg-Verschiebung (F1) des Ausstoßelements (31) zu spannen, wobei die Rückweg-Verschiebung (F2) des Ausstoßelements (31) durch den Betätigungsmechanismus (50) nur aufgrund der Freisetzung der aufgebauten Energie bewirkt wird.

9. Vorrichtung nach einem der vorangehenden Ansprüche, wobei der Übergang des ersten und des zweiten Teils (12, 20) der Aufgusskammer (10) von der Schließposition in die Öffnungsposition durch manuelle Verschiebung eines Griffs (8) bewirkt wird und der Betätigungsmechanismus (50) einen Schwenkhebel (51) umfasst, welcher einerseits einen Griffteil (53) mit dem Ausstoßelement (31) aufweist, um die Hinweg- und Rückweg-Verschiebung (F1, F2) desselben zu veranlassen, und andererseits einen Anschlag (56), mit dem eine Lasche (70) zusammenwirkt, die mit dem Griff (8) verbunden ist, so dass die Verschiebung des Griffes (8) in Richtung der Öffnungsposition der Aufgusskammer (10) die Hinweg-Verschiebung des Ausstoßelements (31) durch Verschwenken des Hebels (51) bewirkt.

10. Vorrichtung nach den Ansprüchen 8 und 9, wobei der Anschlag (56) des Schwenkhebels (51) derart angeordnet ist, das er sich von der Lasche (70) löst, wenn der Griff (8) in der Nähe der Öffnungsposition ist, so dass der Hebel unter Einwirkung der Freigabe des Organs zum Aufbauen von Energie (34) eine entgegengesetzte Schwenkbewegung bewirkt, wobei der Anschlag (56) außer Kontakt mit der mit dem Griff (8) verbundenen Lasche (70) kommt, wenn dieser von der Öffnungsposition in Richtung der Schließposition der Aufgusskammer (10) bewegt wird.
